Europäisches Patentamt

European Patent Office

Office européen des brevets

(11) Publication number: **0 422 234 A1**

(19)

## EUROPEAN PATENT APPLICATION
### published in accordance with Art. 158(3) EPC

(12)

(21) Application number: **90903940.6**

(22) Date of filing: **02.03.90**

(86) International application number: **PCT/JP90/00276**

(87) International publication number: **WO 90/10272 (07.09.90 90/21)**

(51) Int. Cl.⁵: **G06F 15/62**

(30) Priority: **02.03.89 JP 148477/89**

(43) Date of publication of application: **17.04.91 Bulletin 91/16**

(84) Designated Contracting States: **DE FR GB**

(71) Applicant: **FANUC LTD.**
**3580, Shibokusa Aza-Komamba Oshino-mura**
**Minamitsuru-gun, Yamanashi 401-05(JP)**

(72) Inventor: **SAKAKIBARA, S**
**R 101,Mezonizumi 1-23-3, Higashiizumi**
**Komae-shi, Tokyo 201(JP)**
Inventor: **NAGATSUKA, Y F. Dai-3 Vira-karam.**
**3527-1, Shibokusa Oshino-mura,**
**Minamitsuru-gun**
**Yamanashi 401-05(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

(54) **THREE-DIMENSIONAL PARAMETRIC MODELING METHOD.**

(57) A three-dimensional parametric modeling method capable of forming a three-dimensional model that correctly describes a three-dimensional cube after the shape is changed. Phase data (30) and geometrical data (40) are formed to represent the phase structure and geometrical features of a cube which is perceived as a rigid body. Then, calculation is carried out concerning a transform matrix (51) that represents changes in the attitudes of one or more cubic portions of a cube preceived as a non-rigid body, a change quantity (52) of coordinate position components of two curve definition points that represent one or more edge lines of the cube, and a change quantity (53) of coordinate position components of one or more vertexes of the cube. The shape change data (50) are formed based on the result of calculation. Operation of the cube is simulated and reference is made to a particular portion of the cube or the cube is displayed on the screen. In this case, a transform matrix (41) that represents the attitude of a cubic portion, coordinate position components (42) of curve definition points and coordinate position components (43) of vertexes that are corresponding are corrected based on the transform matrix and change quantities of coordinate position components of definition points and vertexes, and a three-dimensional model is formed after the shape is changed.

## THREE DIMENSIONAL PARAMETRIC MODELING METHOD

Technical Field

The present invention relates to a modeling method for creating a model for mathematically describing a three dimensional solid, and more particularly, to a three dimensional parametric modeling method capable of accurately creating a model of a three dimensional solid which is deformative in shape.

Background Art

It is conventionally known to create a three dimensional model for mathematically describing a three dimensional solid (e.g., a machine as a design object in computer aided design system or as an object of program preparation in automatic programming). A typical three dimensional model is described by the use of shape data, which comprises geometrical data indicative of geometrical features of a machine such as vertexes and edges of various machine sections, and topological data indicative of connecting relationships among the machine sections. In conventional three dimensional modeling, a machine is recognized as being perfectly rigid body. On the other hand, shape deformation of machine sections such as flexure and torsion thereof sometimes occurs. In this case, the positions and orientations of the machine sections which undergo shape deformation are changed from those of the machine sections in the three dimensional model. As a consequence, in some cases, an accurate description of a three dimensional solid which is deformative in shape cannot be achieved by means of the conventional three dimensional modeling in which the three dimensional solid is recognized as being rigid body. This causes various inconveniences.

For example, flexure occurs in a robot arm of a cantilever type. Thus, in the case of using the conventional three dimensional model where a robot is recognized as being a rigid body, the quality of an operation program prepared offline is sometimes determined inaccurately. Namely, even when no interferences occur among various sections of the robot and among these robot sections and a work object during a simulated robot operation which is performed in accordance with the operation program and by the use of the conventional three dimensional model neglecting the shape deformation of the robot arm, and hence the quality of the operation program is guaranteed, interference sometimes occurs due to the shape deformation of the robot arm during an actual robot operation performed in accordance with the operation program thus guaranteed.

Disclosure of the Invention

The object of the present invention is to provide a three dimensional parametric modeling method capable of creating a model for accurately describing a three dimensional solid after shape deformation.

In order to the above-mentioned object, according to the present invention, there is provided a three dimensional parametric modeling method for creating a three dimensional model which is described by geometrical data and topological data respectively indicative of geometrical features and topological constructions of a three dimensional solid. This method comprises the steps of: (a) determining shape deformation data indicative of shape deformation of the three dimensional solid; and (b) creating the three dimensional model indicative of the three dimensional solid after shape deformation, on the basis of the geometrical data, the topological data, and the shape deformation data.

As mentioned above, according to the present invention, the three dimensional model is created on the basis of the geometrical data, the topological data and the shape deformation data which respectively represent the geometrical features, topological constructions and shape deformation of the three dimensional solid. This makes it possible to create the three dimensional model for accurately describing the three dimensional solid after shape deformation.

Brief Description of the Drawings

Fig. 1 is a block diagram showing an automatic programming apparatus to which a three dimensional parametric modeling method of an embodiment of the present invention is applied; and

Fig. 2 is a conceptual view showing a construction of shape data which is employed in the apparatus of Fig. 1.

Best Mode of Carrying Out the Invention

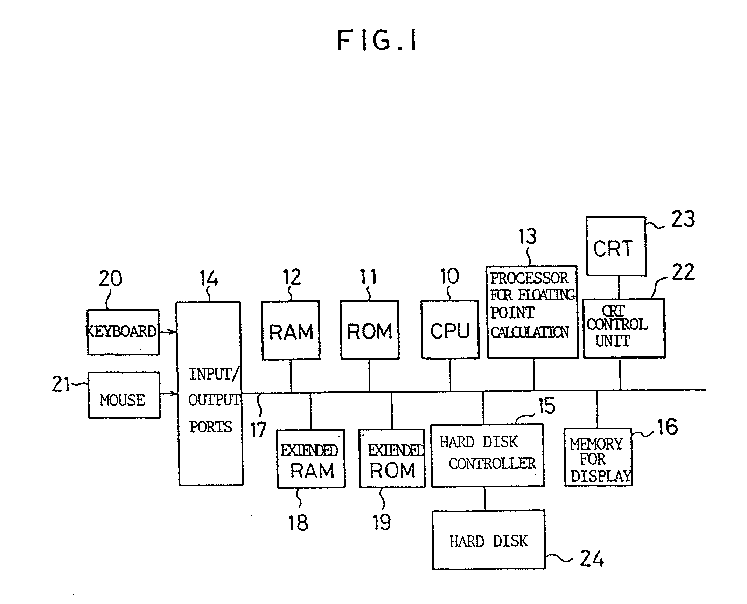

Referring to Fig. 1, an automatic programming apparatus for embodying a three dimensional parametric modeling method of an embodiment of the present invention is arranged to create a three dimensional model which accurately represents a machine composed of a three dimensional solid which is deformative in shape, such as a robot, a belt conveyor or the like. The programming apparatus comprises a central processing unit (hereinafter referred to as CPU) 10, a read-only memory (ROM) 11 storing a control program for control of the programming apparatus, a random access memory (RAM) 12 for storing various data which include shape data mentioned later, and a processor 13 for a floating-point calculation and for executing various processes including a coordinate conversion process, mentioned later.

Further, the automatic programming apparatus comprises input and output ports, connected to a keyboard 20 which is provided with various keys including command keys and numeric keys and connected to a mouse 21 for a cursor movement on a CRT screen (mentioned later) and for position input through the CRT screen, and a hard disk controller 15 to which a hard disk 24 for storage of shape data prepared is connected.

Moreover, the automatic programming apparatus comprises a memory 16 for display, including a frame buffer, and a CRT control unit 22 for controlling a display operation of a graphic display unit (hereinafter referred to as CRT) 23, so that a two dimensional image of a three dimensional solid and a cursor are displayed on the CRT screen. The aforementioned elements 11 - 16 and 22 are connected to the CPU 10 through busses 17. In Fig. 1, reference numerals 18 and 19 denote an extended RAM and an extended ROM which are connectable to the busses 17, if required.

In the present embodiment, the machine (three dimensional solid) for which a model is to be created is a robot or a conveyor, for instance, and consists of a plurality of groups of machine forming sections (a plurality of groups of solid sections). Each machine forming section group consists of one or more machine forming sections (three dimensional solid sections), and each machine forming section consists of one or more shells. Further, each shell relates to one or more faces, and each face relates to one or more edges, and further each edge relates to one or more vertexes.

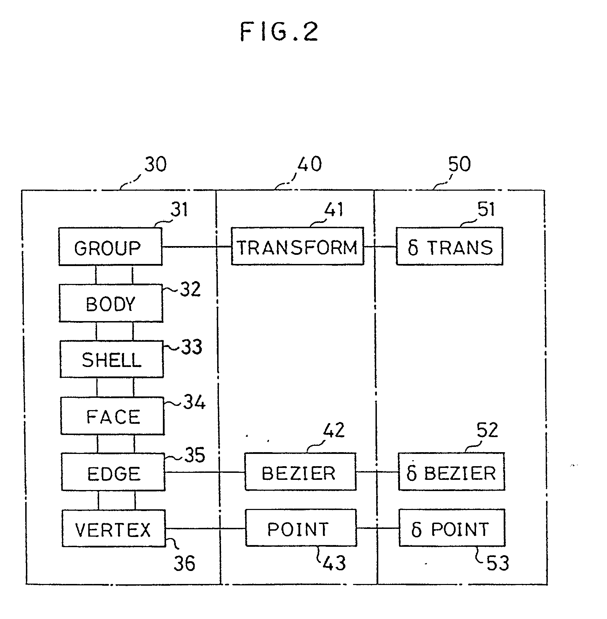

The shape data indicative of the machine has its data construction shown in Fig. 2. Namely, the shape data consists of topological geometric data (hereinafter referred to as topological data) 30 indicative of connecting relationships (topology structure) among the machine sections, Euclidean geometric data (hereinafter referred to as geometric data) 40 indicative of geometric features of the machine, and shape change data or shape deformation data 50 indicative of a change or deformation in shape of the machine. The topological data 30 and the geometric data 40 are respectively prepared by the use of a conventionally known boundary representation method.

The topological data 30 is comprised of various data whose hierarchy corresponds to a hierarchy (solid - solid section group - solid section - shell - face - edge - vertex) of the machine. Namely, the topological data 30 includes group data 31, body data 32, shell data 33, face data 34, edge data 35, and vertex data 36. These data 31 - 36 are described in predetermined connecting relationships, and represent, as a whole, the connecting relationships among the machine sections, i.e., the topological structure of the solid.

More specifically, the topological data 30 includes a plurality of group data 31, i.e., a plurality of first discrimination codes each of which indicates a corresponding one of the plurality of the solid section groups (a corresponding one of the machine forming section groups) which form the solid. Each of the body data 32 corresponding to each group data 31 includes a second discrimination code indicative of a solid section group to which a corresponding one of the solid sections (machine forming sections) belongs, a third discrimination code indicative of the solid section concerned, and additional information indicative of material, etc., of the solid section. Each of the shell data 33 corresponding to each body data 32 includes a fourth discrimination code indicative of a solid section to which a corresponding one of the shells belongs, and a fifth discrimination code indicative of the shell, and a sixth discrimination code indicative of one or more faces which belong to each shell.

Furthermore, each of the face data 34 corresponding to each shell data 33 includes a seventh discrimination code indicative of a corresponding one of the faces, a eighth discrimination code indicative of one or more faces adjacent the corresponding one face, and ninth discrimination code indicative of one or more edges which belong to the corresponding one face. Each of the edge data 35 corresponding to each face data 34 includes a tenth discrimination code indicative of a corresponding one edge, and an eleventh discrimination code indicative of two faces which are adjacent to each other at this edge, a twelfth discrimination code indicative of two vertexes which form opposite ends of the edge, and a thirteenth discrimination code indicative of one or more edges connected to the edge. Further, each of the vertex data 36 corresponding to each edge data 35 includes a fourteenth discrimination code indicative of a corresponding one of the vertexes, and a fifteenth discrimination code indicative of one or more edges to which the vertex belongs.

The geometrical data 40 includes a 4 X 4 homogeneous transformation matrix, which indicates the position and orientation of each solid section group (machine forming section group) represented by the group data 31 relative to a particular solid section group serving as the reference. This transformation matrix 41 is represented as shown below, by using a normal vector $\mathbf{n}$(nx, ny, nz), an orientation vector $\mathbf{O}$(Ox, Oy, Oz), an approach vector $\mathbf{a}$(ax, ay, az), and a position vector $\mathbf{l}$-(lx, ly, lz).

$$\begin{bmatrix} nx & Ox & ax & lx \\ ny & Oy & ay & ly \\ nz & Oz & az & lz \\ 0 & 0 & 0 & 1 \end{bmatrix}$$

Further, the geometrical data 40 includes data 42 indicative of an equation of edge represented by each edge data 35. In the present embodiment, each edge is represented by a Bezier curve or B-spline curve, and each data 42 is comprised of data which indicates coordinate position components $x_1$, $y_1$, $z_1$ and $x_2$, $y_2$, $z_2$ of two curve definition points which are respectively set at opposite ends of an edge concerned. The geometrical data 40 further includes data indicative of coordinate position components $x'$, $y'$, $z'$ of a vertex which is represented by each vertex data 36.

The shape change data 50 includes a plurality of orientation change data 51, a plurality of edge change data 52, and a plurality of vertex change data 53. Each orientation change data 51 serves to compensate a change of the orientation of a corresponding one of the machine forming section groups, which change occurs with a change or deformation of the shape of the machine. The orientation change data relates to a corresponding one of the homogeneous transformation matrices 41, and is comprised of the following 4 X 4 homogeneous transformation matrix 51.

$$\begin{bmatrix} \delta nx & \delta Ox & \delta ax & \delta lx \\ \delta ny & \delta Oy & \delta ay & \delta ly \\ \delta nz & \delta Oz & \delta az & \delta lz \\ 0 & 0 & 0 & 1 \end{bmatrix}$$

Each of the edge change data 52 relates to a corresponding one of data 42 representative of equations of edges, and is comprised of change amounts $\delta x_1$, $\delta y_1$, $\delta z_1$ and $\delta x_2$, $\delta y_2$, $\delta z_2$ of coordinate position components of two curve definition points represented by the data 42. Each of the vertex change data 53 is comprised of change amounts $\delta x'$, $\delta y'$ and $\delta z'$ of coordinate position components of a vertex represented by a corresponding one of the vertex data 36.

In the following, an operation of the automatic programming apparatus as constructed above will be explained.

At first, the automatic programming apparatus recognizes a machine (solid) as being a perfect rigid body and creates a formal three dimensional model of the machine in a conventional manner in response to an operator's operation. The formal three dimensional model is described by shape data which consists of topological data 30 and geometrical data 40, and is stored in the hard disk 24.

In order to take into account a change of shape of the machine, i.e., to create a three dimensional model of the machine under a condition that the machine is recognized as being a non-rigid body, an operator calculates orientation change data 51, edge change data 52 and vertex change data 53 on the basis of size, shape, material, load conditions, etc., of each of the machine forming section groups, by the use of appropriate means. Then, the operator operates the keyboard 20 to set the automatic programming apparatus in a three dimensional model creating mode, and inputs a discrimination code indicative of the machine (solid) for which a model is to be created. In response to this operator's operation, the CPU 10 of the automatic programming apparatus causes the shape data, which describes the formal model indicative of the machine, to be transferred from the hard disk 24 to the RAM 12 via the hard disk controller 15, and to be stored in the RAM. Whereupon, the CPU waits for an operator's operation.

The operator inputs a command "Transform Group" to the automatic programming apparatus through the keyboard 20, to thereby set the programming apparatus in an orientation change data inputting mode. Thereafter, the operator inputs a first discrimination code representative of a group (machine forming section group) to be specified, and then inputs elements $\delta nx$, $\delta ny$, $\delta nz$, $\delta Ox$, $\delta Oy$, $\delta Oz$, $\delta lx$, $\delta ly$, $\delta lz$ of orientation change data, i.e., a homogeneous transformation matrix 51. In response to the input of the first discrimination code and the orientation change data 51, the CPU 10 causes the RAM 12 to store the data 51 at its memory region corresponding to the input code. Meanwhile, if data has been already stored in the same memory region, this stored data is renewed to the new data 51. If required, orientation change data 51 for other groups are input in a similar manner.

Next, the operator inputs a command "Transfer Edge" to thereby set the automatic programming apparatus in an edge change data inputting mode, and then inputs data components $\delta x_1$, $\delta y_1$, $\delta z_1$, $\delta x_2$, $\delta y_2$, $\delta z_2$ which cooperate to form edge change data 52. In response to the input of the tenth discrimination code and the edge change data 52, the CPU 10 causes the RAM 12 to renewably store the data 52 in its memory area corresponding to the input code. If required, edge change data 52 for other edges are input similarly.

Whereupon, the operator inputs a command "Transfer Vertex" to thereby set the automatic programming apparatus in a vertex change data inputting mode, and inputs a fourteenth discrimination code representative of a vertex to be specified, and further inputs data components $\delta x'$, $\delta y'$, $\delta z'$ which form vertex change data 53. In response to the input of the fourteenth discrimination code and the vertex change data 53, the CPU 10 causes the RAM 12 to renewably store the data 53 in its memory area corresponding to the input code. Vertex change data 53 for other vertexes are input, where necessary.

When one of commands "Delete Group Transform", "Delete Edge" and "Delete Vertex Point" is input together with a discrimination code, orientation change data 51, edge change data 52 or vertex change data 53, associated with a corresponding one of group, edge and vertex represented by the input code, is deleted.

As explained above, the three dimensional model of the solid is described by the topological data 30 and the geometrical data 40 which describe the solid recognized as being a perfect rigid body, and by the shape change data 50 describing a change of the shape of the solid which is recognized as being a non-rigid body. In other words, the shape change data 50 is additionally described, without destroying and changing the topological data 30 and the geometrical data 40, and is stored in the RAM 12 separately from these data 30 and 40.

The three dimensional model created in the above manner is utilized in various manners. For example, the model is utilized for simulation which is performed, e.g., for determination of the quality of a program, prepared offline, for operation of various machines (solids), and is utilized for reference to a particular part of various machines, and for screen display of various machines or machine forming section groups. The automatic programming apparatus performs simulation, reference or display operation in response to the supply of a simulation, reference or display command together with a required discrimination code.

In this case, the CPU 10 of the automatic programming apparatus adds data components $\delta x'$, $\delta y'$, $\delta z'$ which form each vertex change data 53 to coordinate position components x', y', z' forming data 43 corresponding to the vertex change data 53, respectively, to thereby correct a coordinate position of the vertex. Further, the CPU adds change amounts $\delta x1$, $\delta y1$, $\delta z1$ and $\delta x2$, $\delta y2$, $\delta z2$ of

coordinate position components of two curve definition points forming each edge change data 52 to coordinate position components x1, y1, z1 and x2, y2, z2 of these points, respectively, to thereby correct coordinate positions of the two definition points. Further, the CPU multiplies each homogeneous transformation matrix (orientation change data) 51 by a corresponding homogeneous transformation matrix 41, thereby calculating a homogeneous transformation matrix indicative of the position and orientation of a solid group concerned after shape change. That is, the CPU creates a three dimensional model accurately describing the solid after shape change.

## Claims

1. A three dimensional parametric modeling method for creating a three dimensional model which is described by geometrical data and topological data respectively indicative of geometrical features and a topological structure of a three dimensional solid, comprising steps of:
   (a) determining shape change data indicative of a shape change of the three dimensional solid; and
   (b) creating the three dimensional model indicative of the three dimensional solid after shape change, on the basis of the geometrical data, the topological data, and said shape change data.

2. A three dimensional parametric modeling method according to claim 1, wherein said shape change data is determined independently and separately from the geometrical data and the topological data in said step (a).

3. A three dimensional parametric modeling method according to claim 1, wherein the geometrical data and the topological data are calculated, with the three dimensional solid recognized as being a rigid body;
   the shape change of the three dimensional solid being calculated, in said step (a), on the basis of dynamic parameters of the three dimensional solid, with the three dimensional solid recognized as being a nonrigid body; and
   said shape change data being determined on the basis of results of the just-mentioned calculation.

4. A three dimensional parametric modeling method according to claim 1, wherein the three dimensional solid has a plurality of solid sections;

the geometrical data including first data indicative of orientations of the plurality of solid sections, second data indicative of edges of the three dimensional solid, and third data indicative of vertexes of the three dimensional solid;

said shape change data including fourth data indicative of a change of the orientation of at least one solid section concerned, fifth data indicative of a change of a position of a point on at least one edge concerned, and sixth data indicative of a change of a position of at least one vertex;

said first, second and third data being respectively corrected in accordance with said fourth, fifth and sixth data, to thereby create the three dimensional solid after shape change.

# FIG.I

# FIG.2

# INTERNATIONAL SEARCH REPORT

International Application No PCT/JP90/00276

**I. CLASSIFICATION OF SUBJECT MATTER** (if several classification symbols apply, indicate all) ⁶

According to International Patent Classification (IPC) or to both National Classification and IPC

Int. Cl⁵    G06F15/62

**II. FIELDS SEARCHED**

Minimum Documentation Searched ⁷

| Classification System | Classification Symbols |
|---|---|
| IPC | G06F15/62 |

Documentation Searched other than Minimum Documentation
to the Extent that such Documents are Included in the Fields Searched ⁸

| | |
|---|---|
| Jitsuyo Shinan Koho | 1926 - 1990 |
| Kokai Jitsuyo Shinan Koho | 1971 - 1990 |

**III. DOCUMENTS CONSIDERED TO BE RELEVANT** ⁹

| Category * | Citation of Document, ¹¹ with indication, where appropriate, of the relevant passages ¹² | Relevant to Claim No. ¹³ |
|---|---|---|
| A | JP, A, 63-170781 (NEC Corporation), 14 July 1988 (14. 07. 88), Fig. 1 (Family: none) | 1 |
| A | JP, A, 63-3380 (NEC Corporation), 8 January 1988 (08. 01. 88), Fig. 1 (Family: none) | 1 |
| A | JP, A, 62-202270 (Nippon Telegraph & Telephone Corporation), 5 September 1987 (05. 09. 87), Fig. 1 (Family: none) | 1 |

\* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 18, 1990 (18. 04. 90) | May 7, 1990 (07. 05. 90) |
| International Searching Authority | Signature of Authorized Officer |
| Japanese Patent Office | |

Form PCT ISA/210 (second sheet) (January 1985)